# EUROPEAN PATENT SPECIFICATION

(11) **EP 4 429 009 B1**
(45) Date of publication and mention of the grant of the patent: **29.10.2025**
(21) Application number: 24162469.1
(22) Date of filing: 08.03.2024
(51) Int. Cl.: H01M 50/325, H01M 50/342, H01M 50/375, H01M 50/147

(54) **EXPLOSION-PROOF VALVE, BATTERY TOP COVER AND LITHIUM BATTERY**
EXPLOSIONSGESCHÜTZTES VENTIL, BATTERIEDECKEL UND LITHIUMBATTERIE
SOUPAPE ANTIDÉFLAGRANTE, COUVERCLE SUPÉRIEUR DE BATTERIE ET BATTERIE AU LITHIUM

(30) Priority: 10.03.2023 CN 202320455734 U
(43) Date of publication of application: 11.09.2024
(73) Proprietor: Jiangsu Zenergy Battery Technologies Group Co., Ltd., Suzhou City, Jiangsu 215500 (CN)
(72) Inventor: CHEN, Yanping, Changshu Suzhou City, Jiangsu, 215500 (CN); DING, Yang, Changshu Suzhou City, Jiangsu, 215500 (CN); SONG, Linlin, Changshu Suzhou City, Jiangsu, 215500 (CN)
(74) Representative: Novagraaf Group

(56) References cited:
- EP-A1- 3 252 849
- WO-A1-2019/232390
- CN-A- 114 843 667
- JP-A- 2015 185 223
- JP-B2- 4 991 186

## Description

### Cross-Reference to Related Application

This application claims priority to Chinese Patent Application No. 202320455734.3 filed to the China National Intellectual Property Administration on March 10, 2023 and entitled "Explosion-Proof Valve, Battery Top Cover and Lithium Battery".

### Technical Field

The present invention relates to the field of power battery manufacturing, and in particular to an explosion-proof valve, a battery top cover and a lithium battery.

### Background

An explosion-proof valve is an explosion-proof structure applied to a lithium battery. When a battery cell undergoes an uncontrollable reaction due to thermal runaway and other accidents, it may generate high-pressure and high-temperature gas that may cause the lithium battery to explode if not released in time. Therefore, the lithium battery is usually provided with the explosion-proof valve to quickly release the internal gas of the lithium battery, thereby playing the role of pressure relief. The existing explosion-proof valve includes a stainless steel sheet, on which a weak area is etched. When the battery cell experiences thermal runaway and generates gas, the internal pressure increases, so as to break through the weak area of the explosion-proof valve to achieve the purpose of pressure relief. However, the explosion-proof valve only functions when the internal pressure reaches a relatively high value, so as to be ineffective in controlling thermal runaway that has already occurred.

In order to overcome the above defects, in the related art, there are solutions to weld a memory metal alloy sheet to a battery top cover, when the thermal runaway occurs inside the lithium battery and the gas pressure does not reach the limit, the memory metal alloy sheet is heated to contract, thereby forming a pressure relief port, which may relieve pressure in time, and may effectively control the thermal runaway that has already occurred. However, in fact, during the installation of the memory metal alloy sheet, the welding temperature is usually higher than 200°C. At such temperature, the memory alloy sheet has a phase change and generates deformation, so that the explosion-proof purpose cannot be achieved when the memory metal alloy sheet is directly welded to the battery top cover.

Therefore, it is necessary to develop a new explosion-proof structure to eliminate the potential safety hazards caused by directly welding the memory metal alloy sheet to the battery top cover at present.

CN114843667A discloses a battery cover plate assembly and a battery are provided. The battery cover plate assembly of the embodiment of the invention includes: a cover plate; the cover plate is provided with a liquid injection hole; a sealing stud; the sealing stud includes a main body part and an extension part, the extension part is connected to the side of the main body part, the sealing stud is connected with the cover plate to seal the liquid injection hole, and at least one of the extension part and the main body part is configured to deform in response to an increase or decrease in temperature. The battery cover plate assembly and the battery of the embodiment of the invention, under the condition of a normal working temperature range of the battery, the sealing stud seals the liquid injection hole, and under the condition of a decrease or increase in temperature, the extension part and/or the main body part deform, so that the cooperation between the sealing stud and the liquid injection hole is no longer tight, thereby facilitating the secondary injection of the battery.

Other known battery systems are disclosed in JP4991186 B2, JP2015185223 A, WO2019/232390 A1 or EP3252849 A1.

### Summary

The aforementioned aims are reached by an explosion proof valve, a battery cover and a lithium battery as claimed in the appended set of claims.

Compared with the related art, the present invention has the following beneficial effects.

According to the explosion-proof valve, the battery top cover and the lithium battery provided in the present invention, the explosion-proof valve cover is made of the memory alloy material, so that when the internal temperature of the lithium battery is higher than the preset temperature control threshold, the explosion-proof valve cover may deform, the crack or the gap is formed between the explosion-proof valve cover and the explosion-proof valve seat, and then high-temperature gas is discharged from the crack or the gap to avoid accidents caused by thermal runaway of the lithium battery; the explosion-proof valve seat is connected to the explosion-proof valve cover in a non-welded manner, so that the influence of the welding temperature on the explosion-proof valve cover may be reduced, and it is ensured that the explosion-proof valve cover has no phase change when the explosion-proof valve cover is connected to the explosion-proof valve seat; and the battery top cover and the explosion-proof valve cover are separated by the explosion-proof valve seat, so that heat generated when the explosion-proof valve seat is welded to the battery top cover and other components does not affect the explosion-proof valve cover, and then it is ensured that the explosion-proof valve cover has no phase change when the explosion-proof valve is welded to the battery top cover and other components, thereby ensuring the explosion-proof effect.

### Brief Description of the Drawings

In order to more clearly illustrate the embodiments of the present invention or the technical solutions in the related art, the drawings used in the description of the embodiments or the related art will be briefly described below. It is apparent that the drawings described below are only some embodiments of the present invention. Other drawings may further be obtained by those of ordinary skill in the art according to these drawings without creative efforts.

The structure, proportion, size, etc. shown in the drawings of the specification are only intended to cooperate with the contents disclosed in this specification for the understanding and reading of those skilled in the art, and are not intended to limit the limiting conditions which may be implemented by the present invention without technical substantive significance. Any structural modifications, changes in proportions or adjustments in size shall still fall within the scope of the technical content disclosed by the present invention without affecting the effect and purpose that may be achieved by the present invention, whose scope is defined by the claims.
Fig. 1 is a first front schematic structural diagram of a battery top cover according to an embodiment of the present invention.
Fig. 2 is a schematic structural diagram of a cross section of a battery top cover in a normal state according to an embodiment of the present invention.
Fig. 3 is a schematic structural diagram of a cross section of a battery top cover in a pressure relief state according to an embodiment of the present invention.
Fig. 4 is a schematic structural diagram of a local section of an explosion-proof valve according to an embodiment of the present invention.
Fig. 5 is a second front schematic structural diagram of a battery top cover according to an embodiment of the present invention.
Fig. 6 is a third front schematic structural diagram of a battery top cover according to an embodiment of the present invention.
Fig. 7 is a schematic structural diagram of a first cross section of a battery top cover according to an embodiment of the present invention.
Fig. 8 is a schematic structural diagram of a second cross section of a battery top cover according to an embodiment of the present invention.

Reference signs: 10. Explosion-proof valve cover; 11. First protrusion; 12. Positioning part; 13. Connecting part; 14. Cover plate;
20. Injection molded member; 21. Second inner ring part; 22. Second outer ring part; 23. First recess; 24. Second recess;
30. Explosion-proof valve seat; 31. First inner ring part; 32. First outer ring part; 33. Second protrusion; 34. First aperture part; 35. Second aperture part;
40. Top cover body; 41. Explosion-proof hole.

### Detailed Description of the Embodiments

In order to make the purposes, technical solutions and advantages of the present invention clearer, the technical solutions in the embodiments of the present invention will be clearly and completely described in conjunction with the drawings in the embodiments of the present invention. It is apparent that the described embodiments are only a part of the embodiments of the present invention, and not all of them. All other embodiments obtained by those of ordinary skill in the art based on the embodiments of the present invention without creative efforts are within the scope of the present invention, as defined in the appended set of claims.

In the description of the present invention, it is to be understood that the orientations or positional relationships indicated by the terms "upper", "down", "top", "bottom", "inside", "outside", etc. are based on the orientations or positional relationships shown in the drawings, and are only for the convenience of describing the present invention and simplifying the description. The description does not indicate or imply that the device or element referred to must have a specific orientation, be constructed and operated in a specific orientation, and therefore cannot be construed as limiting the present invention. It is to be noted that when an element is considered to be "connected" to another component, it may be directly connected to another components or there is a centered components than at the same time.

The specific implementations of the present invention are further described below in conjunction with the drawings and specific implementations.

### Embodiment 1

An explosion-proof valve provided in the embodiment is mainly applied to a battery housing of a lithium battery, in particular to a battery top cover of the lithium battery, to play the role of pressure relief of the lithium battery. By optimizing the structure of the explosion-proof valve, the influence of high temperature generated by welding may be eliminated when the explosion-proof valve is installed on various components by welding, thereby ensuring the safety of the explosion-proof valve.

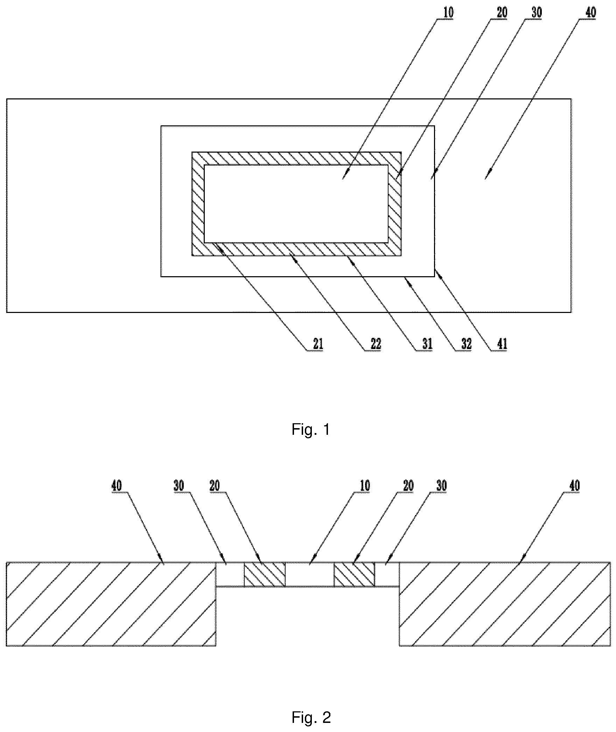

As shown in Fig. 1 to Fig. 3, the explosion-proof valve in the embodiment includes an explosion-proof valve cover 10 and an explosion-proof valve seat 30 connected to a battery in a welded manner, the explosion-proof valve cover 10 being made of a memory alloy material. The explosion-proof valve seat 30 is provided with a valve hole penetrating through the explosion-proof valve seat 30, the explosion-proof valve seat 30 includes a first inner ring part 31 and a first outer ring part 32, the explosion-proof valve cover 10 is arranged in the valve hole, and the explosion-proof valve cover 10 is connected to the first inner ring part 31 in a non-welded manner and seals the valve hole. The explosion-proof valve cover 10 deforms at a temperature higher than a preset temperature control threshold, and a crack or a gap is formed between the deformed explosion-proof valve cover 10 and the explosion-proof valve seat 30. It is to be understood that a manner in which the explosion-proof valve cover 10 is arranged in the valve hole is not limited, and may be that the explosion-proof valve cover 10 is located in the valve hole and connected to the explosion-proof valve seat 30, or the explosion-proof valve cover 10 is located above the valve hole and connected to the explosion-proof valve seat 30, or part of the explosion-proof valve cover 10 is located in the valve hole, and other parts of the explosion-proof cover 10 are located above the valve hole and connected to the explosion-proof valve seat 30.

Specifically, the explosion-proof valve cover 10 is made of the memory alloy material, so that when the internal temperature of the lithium battery is higher than the preset temperature control threshold, the explosion-proof valve cover 10 may deform, the crack or the gap is formed between the explosion-proof valve cover 10 and the explosion-proof valve seat 30, and then high-temperature gas is discharged from the crack or the gap to avoid accidents caused by thermal runaway of the lithium battery; the explosion-proof valve seat 30 is connected to the explosion-proof valve cover 10 in a non-welded manner, so that the influence of the welding temperature on the explosion-proof valve cover 10 may be reduced, and it is ensured that the explosion-proof valve cover 10 has no phase change when the explosion-proof valve cover 10 is connected to the explosion-proof valve seat 30; and the battery top cover and the explosion-proof valve cover 10 are separated by the explosion-proof valve seat 30, so that heat generated when the explosion-proof valve seat 30 is welded to the battery top cover and other components does not affect the explosion-proof valve cover 10, and then it is ensured that the explosion-proof valve cover 10 has no phase change when the explosion-proof valve is welded to the battery top cover and other components, thereby ensuring the explosion-proof effect.

It should be added that when the explosion-proof valve is molded, the explosion-proof valve cover 10 and the explosion-proof valve seat 30 are placed into a mold, and a raw material is injected between the explosion-proof valve cover 10 and the explosion-proof valve seat 30 by means of injection molding. At the same time, the injection molding temperature needs to be controlled to ensure that the injection molding connection does not affect the explosion-proof valve cover 10, so that the raw material is molded into an injection molded member 20, and the explosion-proof valve cover 10 and the explosion-proof valve seat 30 are connected. In other optional implementations not covered by the claims, the injection molded member 20 is a thermal insulation block pre-molded in advance, an inner side of the thermal insulation block is bonded to the explosion-proof valve cover 10 by means of glue, and an outer side of the thermal insulation block is bonded to the explosion-proof valve seat 30 by means of glue.

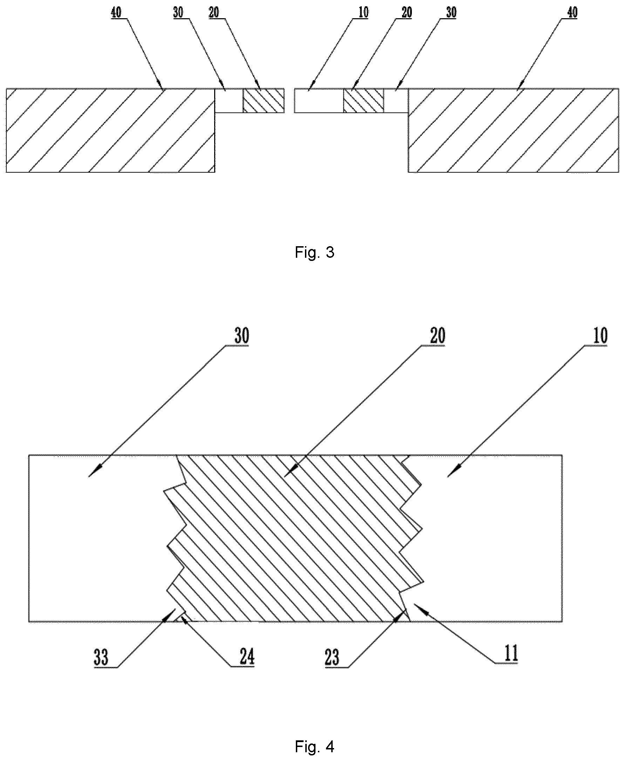

Exemplarily, as shown in Fig. 2 and Fig. 3, when the lithium battery is in a thermal runaway state, the explosion-proof valve cover 10 deforms with the temperature rise, so that the crack or the gap is formed between the explosion-proof valve cover 10 and the second inner ring part 21, and the high-temperature gas is discharged from the crack or the gap; the welding position of the explosion-proof valve seat 30 and the battery top cover and the explosion-proof valve cover 10 are at least separated by the first outer ring part 32, the first inner ring part 31, the second outer ring part 22 and the second inner ring part 21, so that the influence of the welding temperature on the explosion-proof valve cover 10 is further reduced to avoid the explosion-proof valve cover 10 having the phase change in advance, thereby further improving the explosion-proof performance and eliminating the potential safety hazards.

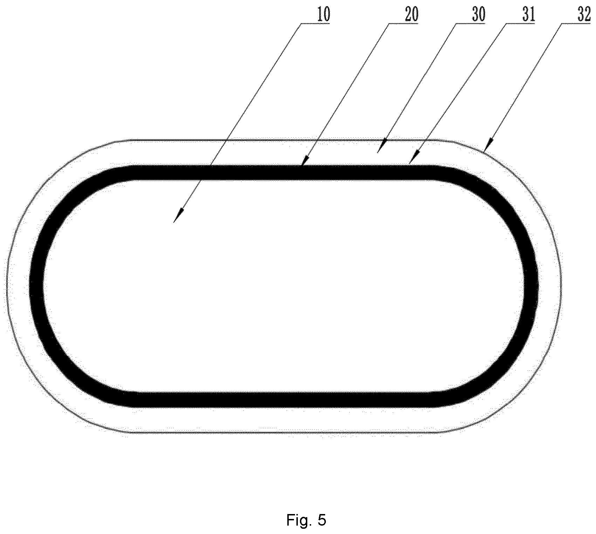

Further, the injection molding temperature is controllable, so that the explosion-proof valve cover 10 is connected to the first inner ring part 31 by means of injection molding. When the explosion-proof valve cover 10 is connected to the first inner ring part 31, it is ensured that the explosion-proof valve cover 10 has no phase change by controlling the injection molding temperature, thereby achieving the purpose of convenient connection and sealing connection, while also ensuring that the explosion-proof valve cover 10 has no phase change. In other optional implementations not covered by the claims, the first inner ring part 31 is connected to the explosion-proof valve cover 10 by means of clamping connection, bonding and other forms. At the same time, it should be added that the outlines of the explosion-proof valve cover 10 and the first inner ring part 31 are not specifically limited, as shown in Fig. 1, the explosion-proof valve cover 10 and the first inner ring part 31 are rectangular, as shown in Fig. 5, the explosion-proof valve cover 10 and the first inner ring part 31 are elliptical, and in other implementations, the explosion-proof valve cover 10 and the first inner ring part 31 are circular, square and in other shapes.

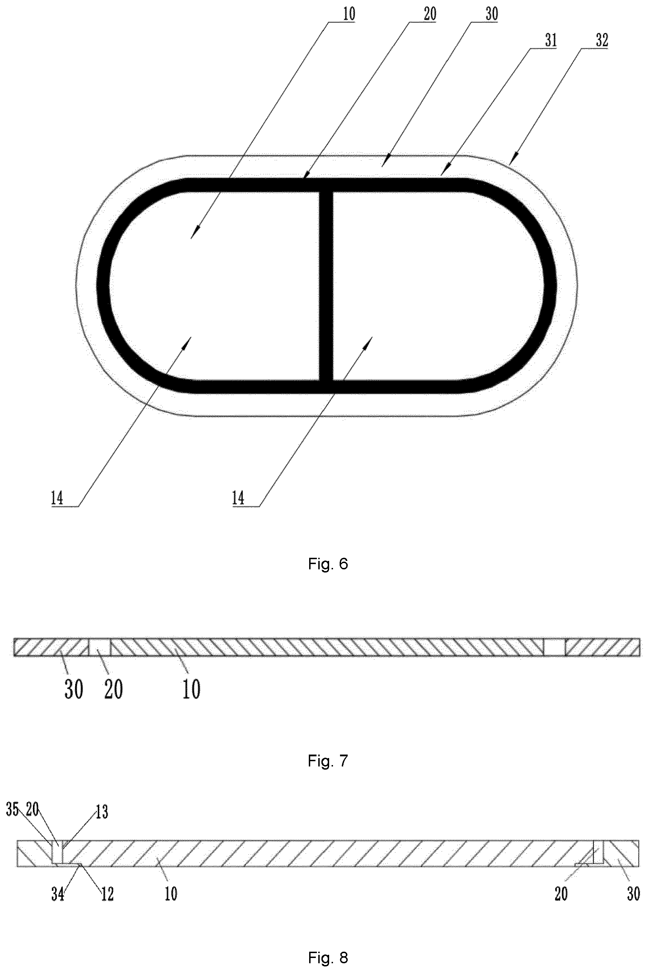

In some embodiments, as shown in Fig. 2 to Fig. 4, the explosion-proof valve cover 10 is arranged in the valve hole. An annular cavity is formed between a peripheral wall of the explosion-proof valve cover 10 and a peripheral wall of the first inner ring part 31, the injection molded member 20 is injection-molded in the annular cavity, and the explosion-proof valve cover 10 and the first inner ring part 31 are integrally connected through the injection molded member 20. The specific shape of the explosion-proof valve cover 10 is not limited, but the shape of the explosion-proof valve cover 10 should be matched with the valve hole, for example, as shown in Fig. 8, when the explosion-proof valve cover 10 includes a positioning part 12 and a connecting part 13 which are connected in sequence, the valve hole includes a first aperture part 34 and a second aperture part 35 which are connected in sequence, the positioning part 12 is matched with the first aperture part 34 in an inserted manner, the annular cavity is formed between a peripheral wall of the connecting part 13 and a hole wall of the second aperture part 35. Through the above arrangement, the explosion-proof valve cover 10 is positioned and pre-fixed in the explosion-proof valve seat 30, which is conducive to the molding of the subsequent injection molded member 20 in the annular cavity.

More specifically, the injection molded member 20 includes the second inner ring part 21 and the second outer ring part 22. The second inner ring part 21 sleeves the explosion-proof valve cover 10, and the first inner ring part 31 sleeves the second outer ring part 22. It is to be noted that the outlines of the second inner ring part 21 and the second outer ring part 22 are not limited, for example, the second inner ring part 21 and the second outer ring part 22 in the embodiment are rectangular, and in other optional implementations, the second inner ring part 21 and/or the second outer ring part 22 is circular. It should be added that the explosion-proof valve seat 30 is made of a metal material that is able to configure for welding, and the explosion-proof valve seat 30 is welded to a top cover body 40 of the battery top cover, so that the explosion-proof valve is installed on the battery top cover.

In some embodiments, an inner peripheral wall of the injection molded member 20 is matched with at least part of the peripheral wall of the explosion-proof valve cover 10 in a concave-convex manner; and/or an outer peripheral wall of the injection molded member 20 is matched with at least part of the peripheral wall of the first inner ring part 31 in a concave-convex manner. It is to be understood that the injection molded member 20 is matched with the explosion-proof valve cover 10 in a concave-convex manner, and the injection molded member 20 is matched with the first inner ring part 31 in a concave-convex manner, so that the contact area between the above components may be increased, and the explosion-proof valve cover 10 and the first inner ring part 31 may be more stably connected through the injection molded member 20. Moreover, it is to be understood that the more stable connection may be achieved as long as the contact area is increased, so that the peripheral wall of the injection molded member 20 is partially or fully matched with the peripheral wall of the explosion-proof valve cover 10 in a concave-convex manner, and the outer peripheral wall of the injection molded member 20 is partially or fully matched with the peripheral wall of the first inner ring part 31 in a concave-convex manner.

More specifically, as shown in Fig. 1 and Fig. 4, a plurality of first protrusions 11 are formed on part or all of a wall surface of the explosion-proof valve cover 10 towards the second inner ring part 21, and first recesses 23 are formed at positions, corresponding to the first protrusions 11, of the second inner ring part 21. The first recesses 23 are in one-to-one correspondence with the first protrusions 11, and the first protrusions 11 are embedded in the first recesses 23. It is to be understood that a contact surface between the explosion-proof valve cover 10 and the injection molded member 20 includes at least a contact surface between the first protrusion 11 and the first recess 23, thereby increasing the contact area between the injection molded member 20 and the explosion-proof valve cover 10. When the injection molded member 20 is injection-molded, due to the increase in the contact area, the connection force between the injection molded member 20 and the explosion-proof valve cover 10 is improved, thereby improving the connection stability of the injection molded member 20 and the explosion-proof valve cover 10.

As shown in Fig. 1 and Fig. 4, a plurality of second protrusions 33 are formed on part or all of a wall surface of the first inner ring part 31 towards the second outer ring part 22, and second recesses 24 are formed at positions, corresponding to the second protrusions 33, of the second outer ring part 22. The second recesses 24 are in one-to-one correspondence with the second protrusions 33, and the second protrusions 33 are embedded in the second recesses 24. It is to be understood that a contact surface between the explosion-proof valve cover 30 and the injection molded member 20 includes at least a contact surface between the second protrusion 33 and the second recess 24, thereby increasing the contact area between the injection molded member 20 and the explosion-proof valve cover 30. When the injection molded member 20 is injection-molded, due to the increase in the contact area, the connection force between the injection molded member 20 and the explosion-proof valve cover 30 is improved, thereby improving the connection stability of the injection molded member 20 and the explosion-proof valve cover 30.

In some embodiments, the first protrusions 11 are formed on the peripheral wall of the explosion-proof valve cover 10 by means of chemical corrosion; and/or the second protrusions 33 are formed on the peripheral wall of the first inner ring part 31 by means of chemical corrosion, so that a concave-convex structure is obtained by means of chemical corrosion, and the processing is faster.

In some embodiments, as shown in Fig. 6, the explosion-proof valve cover 10 is composed of at least two cover plates 14, and the at least two cover plates 14 are integrally connected by means of injection molding. It is to be understood that the cover plates 14 are made of a memory alloy material, so that when the temperature rises, a gap is generated between the two adjacent cover plates 14, which helps the high-temperature gas to be discharged, thereby improving the explosion-proof effect.

In the embodiment, the volume of the explosion-proof valve cover 10 becomes smaller at the temperature higher than the preset temperature control threshold, thereby generating a gap with the injection molded member 20, that is, the memory metal material contracted at high temperature is selected. In other optional implementations, the volume of the explosion-proof valve cover 10 becomes larger at the temperature higher than the preset temperature control threshold, so that the crack is formed between the injection molded member 20 and the explosion-proof valve cover 10, and the high temperature gas is discharged from the crack, that is, the memory metal material expanded at high temperature is selected.

In the embodiment, the preset temperature control threshold ranges from 95°C to 140°C, preferably 120°C, of course, may also be 95°C or 100°C or 140°C.

In summary, the explosion-proof valve provided in the embodiment has the advantages of high production yield, high safety, high stability, reliable connection and the like.

### Embodiment 2

A battery top cover provided in the embodiment includes a top cover body 40 and the explosion-proof valve in Embodiment 1. An explosion-proof valve seat 30 is connected to the top cover body 40 by means of welding. Specifically, as shown in Fig. 1 to Fig. 3, the top cover body 40 is provided with an explosion-proof hole 41, and a first outer ring part 32 of the explosion-proof valve is welded to the top cover body 40 and seals the explosion-proof hole 41. The specific structure and technical effect of the explosion-proof valve are described in Embodiment 1. The battery top cover in the embodiment refers to the structure and also has the technical effect thereof.

In summary, the battery top cover provided in the embodiment has the advantages of high production yield, high safety, high stability, reliable connection and the like.

### Embodiment 3

A lithium battery provided in the embodiment includes a battery top cover and a battery housing. The battery top cover and/or the battery housing are/is connected to the explosion-proof valve in Embodiment 1 by means of welding. The specific structure and technical effect of the explosion-proof valve are described in Embodiment 1. The lithium battery in the embodiment refers to the structure and also has the technical effect thereof.

In summary, the lithium battery provided in the embodiment has the advantages of high production yield, high safety, high stability, reliable connection and the like.

In summary, the above embodiments are only intended to illustrate the technical solutions of the present invention, but not intended to limit the present invention. Although the present invention is described in detail with reference to the foregoing embodiments, it should be understood by those of ordinary skill in the art that: they may still make modifications to the technical solutions described in the foregoing embodiments to part of the technical features without any modification of the technical solutions or departures from the scope of the technical solutions of the embodiments of the present invention as defined by the claims.

## Claims

1. An explosion-proof valve, comprising an explosion-proof valve cover (10), the explosion-proof valve cover (10) being made of a memory alloy material, wherein the explosion-proof valve comprises an explosion-proof valve seat (30) connectable to a battery in a welded manner;
the explosion-proof valve seat (30) is provided with a valve hole penetrating through the explosion-proof valve seat (30), the explosion-proof valve seat (30) comprises a first inner ring part (31) and a first outer ring part (32), the explosion-proof valve cover (10) is arranged in the valve hole;
wherein the explosion-proof valve cover (10) deforms at a temperature higher than a preset temperature control threshold, and a crack or a gap is formed between the deformed explosion-proof valve cover (10) and the explosion-proof valve seat (30),
**characterised in that** the explosion-proof valve cover (10) is connected to the first inner ring part (31) by means of injection molding and seals the valve hole.

2. The explosion-proof valve as claimed in claim 1, wherein the explosion-proof valve cover (10) is arranged in the valve hole; and
an annular cavity is formed between a peripheral wall of the explosion-proof valve cover (10) and a peripheral wall of the first inner ring part (31), an injection molded member (20) is injection-molded in the annular cavity, and the explosion-proof valve cover (10) and the first inner ring part (31) are integrally connected through the injection molded member (20).

3. The explosion-proof valve as claimed in claim 2, wherein an inner peripheral wall of the injection molded member (20) is matched with at least part of the peripheral wall of the explosion-proof valve cover (10) in a concave-convex manner; and/or an outer peripheral wall of the injection molded member (20) is matched with at least part of the peripheral wall of the first inner ring part (31) in a concave-convex manner.

4. The explosion-proof valve as claimed in claim 3, wherein first protrusions (11) are formed on the peripheral wall of the explosion-proof valve cover (10) by means of chemical corrosion; and/or second protrusions (33) are formed on the peripheral wall of the first inner ring part (31) by means of chemical corrosion.

5. The explosion-proof valve as claimed in claim 1, wherein the explosion-proof valve cover (10) comprises a positioning part (12) and a connecting part (13) which are connected in sequence, the valve hole comprises a first aperture part (34) and a second aperture part (35) which are connected in sequence, the positioning part (12) is matched with the first aperture part (34) in an inserted manner, and an annular cavity is formed between a peripheral wall of the connecting part (13) and a hole wall of the second aperture part (35).

6. The explosion-proof valve as claimed in claim 1, wherein the explosion-proof valve cover (10) and the first inner ring part (31) are any one of elliptical, circular and square.

7. The explosion-proof valve as claimed in claim 2, wherein the injection molded member (20) comprises a second inner ring part (21) and a second outer ring part (22), the second inner ring part (21) sleeves the explosion-proof valve cover (10), and the first inner ring part (31) sleeves the second outer ring part (22).

8. The explosion-proof valve as claimed in claim 7, wherein the second inner ring part (21) and the second outer ring part (22) are any one of rectangular and circular.

9. The explosion-proof valve as claimed in claim 1, wherein the explosion-proof valve cover (10) is composed of at least two cover plates (14), and the at least two cover plates (14) are integrally connected by means of injection molding.

10. The explosion-proof valve as claimed in claim 1, wherein the volume of the explosion-proof valve cover (10) becomes smaller at the temperature higher than the preset temperature control threshold.

11. The explosion-proof valve as claimed in claim 1, wherein the preset temperature control threshold ranges from 95°C to 140°C.

12. A battery top cover, comprising a top cover body (40) and the explosion-proof valve as claimed in any one of claims 1 to 11, wherein the top cover body (40) is provided with an explosion-proof hole (41), and the first outer ring part (32) of the explosion-proof valve is welded to the top cover body (40) and seals the explosion-proof hole (41).

13. A lithium battery, comprising a battery housing, the battery housing comprising the explosion-proof valve as claimed in any one of claims 1 to 11, the first outer ring part (32) of the explosion-proof valve being connected to the battery housing in the welded manner.

## Patentansprüche

1. Explosionsgeschütztes Ventil, umfassend einen explosionsgeschützten Ventildeckel (10), wobei der explosionsgeschützte Ventildeckel (10) aus einem Memory-Legierungsmaterial hergestellt ist, wobei das explosionsgeschützte Ventil einen explosionsgeschützten Ventilsitz (30) umfasst, der durch Schweißen mit einer Batterie verbunden werden kann;
der explosionsgeschützte Ventilsitz (30) ist mit einer Ventilbohrung versehen, die durch den explosionsgeschützten Ventilsitz (30) hindurchgeht, der explosionsgeschützte Ventilsitz (30) umfasst einen ersten inneren Ringteil (31) und einen ersten äußeren Ringteil (32), der explosionsgeschützte Ventildeckel (10) ist in der Ventilbohrung angeordnet;
wobei sich der explosionsgeschützte Ventildeckel (10) bei einer Temperatur über einem voreingestellten Temperaturregelschwellenwert verformt und zwischen dem verformten explosionsgeschützten Ventildeckel (10) und dem explosionsgeschützten Ventilsitz (30) ein Riss oder ein Spalt entsteht, **dadurch gekennzeichnet, dass** der explosionsgeschützte Ventildeckel (10) mit dem ersten inneren Ringteil (31) mittels Spritzgießen verbunden ist und die Ventilbohrung abdichtet.

2. Explosionsgeschütztes Ventil nach Anspruch 1, wobei der explosionsgeschützte Ventildeckel (10) in der Ventilbohrung angeordnet ist; und
ein ringförmiger Hohlraum zwischen einer Umfangswand des explosionssicheren Ventildeckels (10) und einer Umfangswand des ersten inneren Ringteils (31) gebildet wird, ein Spritzgusselement (20) in dem ringförmigen Hohlraum spritzgegossen wird und der explosionsgeschützte Ventildeckel (10) und der erste innere Ringteil (31) durch das Spritzgusselement (20) einstückig verbunden sind.

3. Explosionsgeschütztes Ventil nach Anspruch 2, wobei eine innere Umfangswand des Spritzgusselements (20) konkav-konvex mit mindestens einem Teil der Umfangswand des explosionsgeschützten Ventildeckels (10) auf konkav-konvexe Weise zusammengepasst ist; und/oder eine äußere Umfangswand des Spritzgusselements (20) mit mindestens einem Teil der Umfangswand des ersten inneren Ringteils (31) auf konkav-konvexe Weise zusammengepasst ist.

4. Explosionsgeschütztes Ventil nach Anspruch 3, wobei erste Vorsprünge (11) an der Umfangswand des explosionsgeschützten Ventildeckels (10) mittels chemischer Korrosion gebildet werden; und/oder zweite Vorsprünge (33) an der Umfangswand des ersten inneren Ringteils (31) mittels chemischer Korrosion gebildet werden.

5. Explosionsgeschütztes Ventil nach Anspruch 1, wobei der explosionsgeschützte Ventildeckel (10) einen Positionierungsteil (12) und einen Verbindungsteil (13) umfasst, die nacheinander verbunden sind, die Ventilbohrung einen ersten Aperturteil (34) und einen zweiten Aperturteil (35) umfasst, die nacheinander verbunden sind, der Positionierungsteil (12) mit dem ersten Aperturteil (34) in einer eingefügten Weise zusammenpasst ist und ein ringförmiger Hohlraum zwischen einer Umfangswand des Verbindungsteils (13) und einer Bohrungswand des zweiten Aperturteils (35) gebildet wird.

6. Explosionsgeschütztes Ventil nach Anspruch 1, wobei der explosionsgeschützte Ventildeckel (10) und der erste innere Ringteil (31) elliptisch, kreisförmig oder quadratisch sind.

7. Explosionsgeschütztes Ventil nach Anspruch 2, wobei das Spritzgusselement (20) einen zweiten inneren Ringteil (21) und einen zweiten äußeren Ringteil (22) umfasst, wobei der zweite innere Ringteil (21) den explosionsgeschützten Ventildeckel (10) umhüllt und der erste innere Ringteil (31) den zweiten äußeren Ringteil (22) umhüllt.

8. Explosionsgeschütztes Ventil nach Anspruch 7, wobei der zweite innere Ringteil (21) und der zweite äußere Ringteil (22) entweder rechteckig oder kreisförmig sind.

9. Explosionsgeschütztes Ventil nach Anspruch 1, wobei der explosionsgeschützte Ventildeckel (10) aus mindestens zwei Deckplatten (14) besteht und die mindestens zwei Deckplatten (14) durch Spritzgießen einstückig miteinander verbunden sind.

10. Explosionsgeschütztes Ventil nach Anspruch 1, wobei das Volumen des explosionsgeschützten Ventildeckels (10) bei einer Temperatur, die über dem voreingestellten Temperaturregelschwellenwert liegt, kleiner wird.

11. Explosionsgeschütztes Ventil nach Anspruch 1, wobei der voreingestellte Temperaturregelschwellenwert im Bereich von 95 °C bis 140 °C liegt.

12. Obere Batterieabdeckung, umfassend einen oberen Abdeckungskörper (40) und das explosionsgeschützte Ventil nach einem der Ansprüche 1 bis 11, wobei der obere Abdeckungskörper (40) mit einer explosionsgeschützten Bohrung (41) versehen ist und der erste äußere Ringteil (32) des explosionsgeschützten Ventils an den oberen Abdeckungskörper (40) geschweißt ist und die explosionsgeschützte Bohrung (41) abdichtet.

13. Lithiumbatterie, umfassend ein Batteriegehäuse, wobei das Batteriegehäuse das explosionsgeschützte Ventil nach einem der Ansprüche 1 bis 11 umfasst, wobei der erste äußere Ringteil (32) des explosionsgeschützten Ventils durch Schweißen mit dem Batteriegehäuse verbunden ist.

## Revendications

1. Soupape antidéflagrante, comprenant un couvercle de soupape antidéflagrante (10), le couvercle de soupape antidéflagrante (10) étant fabriqué dans un matériau d'alliage à mémoire, dans laquelle la soupape antidéflagrante comprend un siège de soupape antidéflagrante (30) pouvant être relié à une batterie d'une manière soudée ;
le siège de soupape antidéflagrante (30) est pourvu d'un trou de soupape pénétrant à travers le siège de soupape antidéflagrante (30), le siège de soupape antidéflagrante (30) comprend une première partie d'anneau interne (31) et une première partie d'anneau externe (32), le couvercle de soupape antidéflagrante (10) est agencé dans le trou de soupape ;
dans laquelle le couvercle de soupape antidéflagrante (10) se déforme à une température supérieure à un seuil de commande de température prédéfini, et une fissure ou un espace est formé entre le couvercle de soupape antidéflagrante (10) déformé et le siège de soupape antidéflagrante (30), **caractérisé en ce que** le couvercle de soupape antidéflagrante (10) est relié à la première partie d'anneau interne (31) au moyen d'un moulage par injection et scelle le trou de soupape.

2. Soupape antidéflagrante selon la revendication 1, dans laquelle le couvercle de soupape antidéflagrante (10) est agencé dans le trou de soupape ; et
une cavité annulaire est formée entre une paroi périphérique du couvercle de soupape antidéflagrante (10) et une paroi périphérique de la première partie d'anneau interne (31), un élément moulé par injection (20) est moulé par injection dans la cavité annulaire, et le couvercle de soupape antidéflagrante (10) et la première partie d'anneau interne (31) sont reliés de façon solidaire par le biais de l'élément moulé par injection (20).

3. Soupape antidéflagrante selon la revendication 2, dans laquelle une paroi périphérique interne de l'élément moulé par injection (20) est en correspondance avec au moins une partie de la paroi périphérique du couvercle de soupape antidéflagrante (10) d'une manière concave-convexe ; et/ou une paroi périphérique externe de l'élément moulé par injection (20) est en correspondance avec au moins une partie de la paroi périphérique de la première partie d'anneau interne (31) d'une manière concave-convexe.

4. Soupape antidéflagrante selon la revendication 3, dans laquelle des premières parties saillantes (11) sont formées sur la paroi périphérique du couvercle de soupape antidéflagrante (10) au moyen d'une corrosion chimique ; et/ou des secondes parties saillantes (33) sont formées sur la paroi périphérique de la première partie d'anneau interne (31) au moyen d'une corrosion chimique.

5. Soupape antidéflagrante selon la revendication 1, dans laquelle le couvercle de soupape antidéflagrante (10) comprend une partie de positionnement (12) et une partie de liaison (13) qui sont reliées successivement, le trou de soupape comprend une première partie d'ouverture (34) et une seconde partie d'ouverture (35) qui sont reliées successivement, la partie de positionnement (12) est en correspondance avec la première partie d'ouverture (34) d'une manière insérée, et une cavité annulaire est formée entre une paroi périphérique de la partie de liaison (13) et une paroi de trou de la seconde partie d'ouverture (35).

6. Soupape antidéflagrante selon la revendication 1, dans laquelle le couvercle de soupape antidéflagrante (10) et la première partie d'anneau interne (31) sont l'un quelconque parmi elliptique, circulaire et carré.

7. Soupape antidéflagrante selon la revendication 2, dans laquelle l'élément moulé par injection (20) comprend une seconde partie d'anneau interne (21) et une seconde partie d'anneau externe (22), la seconde partie d'anneau interne (21) enserre le couvercle de soupape antidéflagrante (10), et la première partie d'anneau interne (31) enserre la seconde partie d'anneau externe (22).

8. Soupape antidéflagrante selon la revendication 7, dans laquelle la seconde partie d'anneau interne (21) et la seconde partie d'anneau externe (22) sont l'un quelconque parmi rectangulaire et circulaire.

9. Soupape antidéflagrante selon la revendication 1, dans laquelle le couvercle de soupape antidéflagrante (10) est composé d'au moins deux plaques de couverture (14), et les au moins deux plaques de couverture (14) sont reliées de façon solidaire au moyen d'un moulage par injection.

10. Soupape antidéflagrante selon la revendication 1, dans laquelle le volume du couvercle de soupape antidéflagrante (10) devient plus petit à la température supérieure au seuil de commande de température prédéfini.

11. Soupape antidéflagrante selon la revendication 1, dans laquelle le seuil de commande de température prédéfini va de 95 °C à 140 °C.

12. Couvercle supérieur de batterie, comprenant un corps de couvercle supérieur (40) et la soupape antidéflagrante selon l'une quelconque des revendications 1 à 11, dans lequel le corps de couvercle supérieur (40) est pourvu d'un trou antidéflagrant (41), et la première partie d'anneau externe (32) de la soupape antidéflagrante est soudée au corps de couvercle supérieur (40) et scelle le trou antidéflagrant (41).

13. Batterie au lithium, comprenant un logement de batterie, le logement de batterie comprenant la soupape antidéflagrante selon l'une quelconque des revendications 1 à 11, la première partie d'anneau externe (32) de la soupape antidéflagrante étant reliée au logement de batterie de la manière soudée.
